# FASCICULE DE BREVET EUROPEEN

(11) **EP 3 563 244 B1**
(45) Date de publication et mention de la délivrance du brevet: **07.02.2024**
(21) Numéro de dépôt: 17832309.3
(22) Date de dépôt: 28.12.2017
(51) Int. Cl.: G06F 12/02, G06F 12/08, G06F 12/1081

(54) **PROCEDE DE GESTION DE MEMOIRE VIRTUELLE**
VERFAHREN ZUR VERWALTUNG VIRTUELLER SPEICHER
METHOD FOR MANAGING VIRTUAL MEMORY

(30) Priorité: 28.12.2016 FR 1663459
(43) Date de publication de la demande: 06.11.2019
(73) Titulaire: Bull SAS, 78340 Les Clayes-sous-Bois (FR); Commissariat à l'énergie atomique et aux énergies alternatives, 75015 Paris (FR)
(72) Inventeur: WELLENREITER, François, 38210 Vourey (FR)
(74) Mandataire: Plasseraud IP
(86) Numéro de dépôt international: PCT/FR2017/053863
(87) Numéro de publication internationale: WO 2018/122539

(56) Documents cités:
- US-A1- 2007 245 041
- US-A1- 2009 037 941
- US-A1- 2012 265 916
- US-B1- 7 065 630

## Description

### DOMAINE DE L'INVENTION

L'invention concerne le domaine des procédés de gestion, dans un système informatique incluant un périphérique et son pilote, d'une mémoire virtuelle d'une application utilisatrice du périphérique, ainsi que des systèmes informatiques correspondants.

### CONTEXTE DE L'INVENTION

Selon un art antérieur, il est connu, dans un système informatique incluant un périphérique et son pilote, ainsi qu'une application utilisatrice du périphérique, cette application utilisatrice disposant d'une mémoire virtuelle, de créer une autre mémoire virtuelle pour les besoins du périphérique qui est gérée par son pilote. Quoique de taille modeste, cette autre mémoire virtuelle nécessite des étapes de création et de gestion qui sont surdimensionnées compte-tenu de la taille modeste requise pour cette autre mémoire virtuelle.

Cet art antérieur présente donc l'inconvénient de requérir une autre mémoire virtuelle nécessitant des étapes de création et de gestion surdimensionnées compte-tenu de la taille modeste de cette autre mémoire virtuelle.

Notamment, lors du fonctionnement de l'application utilisatrice du périphérique, la mémoire virtuelle de cette application utilisatrice serait utilisée, ainsi que l'autre mémoire virtuelle du pilote, au moins dans son fonctionnement pour les besoins de cette application utilisatrice. Par conséquent deux mémoires virtuelles devraient être gérées en permanence, pour les besoins d'une seule application utilisatrice. US 2009/037941 divulgue un système dans lequel un accès à un dispositif d'entrée-sortie d'autovirtualisation d'un système de traitement de données est fourni à des partitions logiques multiples par l'intermédiaire de plusieurs instances de partitions adjointes dédiées.

### RESUME DE L'INVENTION

Le but de la présente invention est de fournir un procédé de gestion de mémoire virtuelle palliant au moins partiellement les inconvénients précités.

L'invention va donc proposer de se passer de cette autre mémoire virtuelle, en se contentant d'utiliser la mémoire virtuelle de l'application utilisatrice, puisque cette mémoire virtuelle existe déjà, est de taille notable, et que seule une partie limitée, et généralement minoritaire, de cette mémoire virtuelle serait réservée pour le pilote du périphérique.

Plus particulièrement, l'invention vise à fournir un procédé de gestion de la mémoire virtuelle de l'application utilisatrice lui permettant d'en utiliser une partie, généralement une petite partie, pour le pilote du périphérique.

Pour que cette partie de la mémoire virtuelle de l'application utilisatrice du périphérique, soit utilisée par le pilote du périphérique, de manière bien sécurisée, l'invention propose un premier niveau de sécurité en constituant une réserve de mémoire virtuelle dans la mémoire virtuelle de l'application utilisatrice, cette réserve de mémoire virtuelle étant rendue inaccessible à l'application utilisatrice. Pour cela, une application gestionnaire de cette réserve de mémoire virtuelle est créée de manière à ce qu'elle soit distincte de l'application utilisatrice. Cela empêche l'application utilisatrice, par erreur ou par malveillance, d'accéder à cette réserve de mémoire virtuelle et d'en modifier le contenu, ce qui ensuite risquerait de perturber le fonctionnement du pilote du périphérique et par contagion de toutes les autres applications utilisatrices de ce périphérique et de son pilote.

L'invention propose également simultanément un deuxième niveau de sécurité en dédiant cette application gestionnaire à la gestion de cette réserve de mémoire virtuelle, ce qui évite que sinon, les autres opérations que réaliserait cette application gestionnaire en dehors de cette gestion de mémoire virtuelle, ou en dehors d'autres gestions de mémoires virtuelles, notamment pour l'application utilisatrice, viennent, par erreur ou par malveillance, accéder à cette réserve de mémoire virtuelle et en modifier le contenu.

Par conséquent, cette application gestionnaire n'est donc pas une seconde application utilisatrice, du même type ou d'un type similaire ou encore comparable à celui de la première application utilisatrice, qui serait simplement différente de cette première application utilisatrice, et qui par conséquent risquerait aussi de détériorer le contenu de la réserve de mémoire virtuelle, c'est au contraire une application « spécialisée » dans la gestion de mémoire(s) virtuelle(s), pour une ou plusieurs applications utilisatrices de ce périphérique.

Cette application gestionnaire dédiée n'est pas facilement accessible de l'extérieur du système informatique, ce qui au contraire est le cas pour les applications utilisatrices plus facilement accessibles par les utilisateurs extérieurs du système informatique. Ces utilisateurs extérieurs étant par définition moins contrôlés que le coeur du système informatique, le risque d'erreur et/ou de malveillance est nettement plus élevé pour eux.

A cette fin, la présente invention propose un procédé de gestion, dans un système informatique incluant un périphérique et son pilote, d'une mémoire virtuelle d'une application utilisatrice du périphérique lequel peut accéder à la mémoire virtuelle de l' application utilisatrice, où le procédé de gestion comprend : la création, dans la mémoire virtuelle de l'application utilisatrice, d'une réserve de mémoire virtuelle qui est d'une part accessible au périphérique et d'autre part inaccessible à l'application utilisatrice, la création d'une application gestionnaire qui soit distincte de l'application utilisatrice et qui soit créée par le pilote du périphérique et qui soit dédiée à l'allocation d'au moins cette réserve de mémoire virtuelle et à la libération d'au moins cette réserve de mémoire virtuelle. Préférentiellement, dans le cas d'une seule application utilisatrice à gérer, l'application gestionnaire est distincte de l'application utilisatrice et est dédiée à l'allocation de cette réserve de mémoire virtuelle et à la libération de cette réserve de mémoire virtuelle. Préférentiellement, dans le cas de plusieurs applications utilisatrices à gérer, l'application gestionnaire est distincte de l'application utilisatrice et est dédiée à l'allocation de cette réserve de mémoire virtuelle et à la libération de cette réserve de mémoire virtuelle ainsi qu'à l'allocation d'une ou de plusieurs autres réserves de mémoire virtuelle et à la libération de cette ou de ces autres réserves de mémoire virtuelle, avec avantageusement au moins une réserve de mémoire virtuelle par application utilisatrice.

A cette fin, la présente invention propose également un système informatique comprenant : un périphérique, un pilote de ce périphérique, une application utilisatrice de ce périphérique, une mémoire virtuelle de cette application utilisatrice, l'application utilisatrice étant associée au périphérique de manière à ce que le périphérique puisse accéder à la mémoire virtuelle de cette application utilisatrice, où système informatique comprend aussi : une application gestionnaire, distincte de l'application utilisatrice, créée par le pilote du périphérique, dédiée à l'allocation d'au moins une réserve de mémoire virtuelle et à la libération d'au moins cette réserve de mémoire virtuelle, cette réserve de mémoire virtuelle est localisée dans la mémoire virtuelle de l'application utilisatrice en étant d'une part accessible au périphérique et d'autre part inaccessible à l'application utilisatrice. Préférentiellement, dans le cas d'une seule application utilisatrice à gérer, l'application gestionnaire, distincte de l'application utilisatrice, est dédiée à l'allocation d'une réserve de mémoire virtuelle et à la libération de cette réserve de mémoire virtuelle. Préférentiellement, dans le cas de plusieurs applications utilisatrices à gérer, l'application gestionnaire, distincte de toutes ces applications utilisatrices, est dédiée à l'allocation de plusieurs réserves de mémoire virtuelle et à la libération de ces réserves de mémoire virtuelle, avec avantageusement au moins une réserve de mémoire virtuelle par application utilisatrice.

Selon des modes de réalisation préférentiels de l'invention, une ou plusieurs zones de la mémoire virtuelle de l'application utilisatrice du périphérique ne peuvent plus du tout être accédées par cette application utilisatrice par raison de sécurité, tandis que ces zones de mémoire virtuelle de l'application utilisatrice restent librement utilisables comme réserve de mémoire additionnelle par le pilote du périphérique.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets de l'invention précités.

Dans l'invention, l'application gestionnaire est créée par le pilote du périphérique. Ainsi, le fonctionnement est plus simple et plus cohérent, car cette application gestionnaire va accéder à la réserve de mémoire virtuelle constituée dans la mémoire virtuelle de l'application utilisatrice, pour le pilote du périphérique pour les besoins de cette application utilisatrice dans son utilisation de ce périphérique.

De préférence, l'application gestionnaire est enregistrée auprès du périphérique, lors de sa création par le pilote du périphérique. Ainsi, le pilote du périphérique garde le contrôle de l'application gestionnaire qu'il a créée.

De préférence, l'allocation de cette réserve de mémoire virtuelle et la libération de cette réserve de mémoire virtuelle sont effectuées de manière dynamique à la requête du pilote du périphérique. Ainsi, d'une part le pilote du périphérique utilise cette réserve de mémoire virtuelle comme prévu lors de la création de cette réserve de mémoire virtuelle, et d'autre part il peut l'utiliser rapidement, en temps réel ou presque.

De préférence, l'allocation de cette réserve de mémoire virtuelle et la libération de cette réserve de mémoire virtuelle, dans la mémoire virtuelle de l'application utilisatrice, pour une ou plusieurs applications utilisatrices, sont les seules fonctions de l'application gestionnaire. Ainsi, on évite que sinon, les autres opérations que réaliserait cette application gestionnaire en dehors de cette gestion de mémoire(s) virtuelle(s), viennent, par erreur ou par malveillance, accéder à cette réserve de mémoire et en modifier le contenu. L'application créée par le pilote du périphérique, c'est-à-dire par le driver pilotant le périphérique, qui est différente de l'application utilisatrice, est enregistrée auprès de ce pilote, et a pour seules fonctions d'allouer et/ou de désallouer des plages de mémoire(s) virtuelle(s) via un dialogue avec ce pilote.

De préférence, l'application utilisatrice a été préalablement et spécifiquement configurée pour permettre au périphérique d'accéder à la mémoire virtuelle de cette application utilisatrice. Ainsi, cela permet au pilote du périphérique de créer facilement l'application gestionnaire qui va elle-même réserver une partie de cette mémoire virtuelle. Le pilote du périphérique est capable d'accéder à n'importe quelle zone de la mémoire virtuelle de l'application utilisatrice de ce périphérique, cette application virtuelle ayant été préalablement et spécifiquement configurée à cet effet.

De préférence, le périphérique utilise la réserve de mémoire virtuelle exclusivement pour les besoins de l'application utilisatrice correspondante. Ainsi, d'une part la taille de la réserve reste faible et d'autre part aucune donnée dédiée à d'autres applications utilisatrices ne vient polluer la mémoire virtuelle de cette application utilisatrice. Le pilote du périphérique ayant besoin de mémoire pour les besoins purement liés au fonctionnement de l'application utilisatrice de ce périphérique, il est intéressant de pouvoir disposer, au moins en partie, de la mémoire virtuelle de cette application utilisatrice.

De préférence, une même application gestionnaire gère les réserves de mémoire virtuelles de plusieurs applications utilisatrices d'un même périphérique, de préférence de toutes les applications utilisatrices d'un même périphérique, encore plus de préférence de toutes les applications utilisatrices de plusieurs ou de tous les périphériques du système informatique. Ainsi, cette application gestionnaire, « spécialisée » dans la gestion de mémoire(s) virtuelle(s), est bien rentabilisée.

Préférentiellement, la réserve de mémoire virtuelle occupe strictement moins de la moitié de l'espace mémoire de la mémoire virtuelle dans laquelle elle est stockée. Ainsi, seule une minorité de la mémoire virtuelle de l'application utilisatrice est détournée d'une utilisation directe par l'application utilisatrice.

De préférence, la réserve de mémoire virtuelle occupe moins de 1% de l'espace mémoire de la mémoire virtuelle dans laquelle elle est stockée. Ainsi, la réservation de cette très faible proportion de la mémoire virtuelle de l'application utilisatrice ne présente aucun risque de perturber le fonctionnement de l'application utilisatrice par manque de mémoire virtuelle disponible, l'application utilisatrice n'utilisant pas toute sa mémoire virtuelle et en tous cas pas toute sa mémoire virtuelle en permanence.

De préférence, le pilote de périphérique stocke, dans la réserve de mémoire virtuelle, des informations qui d'une part sont propres à l'application utilisatrice et qui d'autre part peuvent permettre d'accéder à d'autres applications utilisatrices en cas de modification de ces informations. Cela confirme, dans ce cas, le caractère particulièrement critique des données stockées, et l'étendue des dégâts dans le système informatique qui pourrait résulter d'une modification intempestive, volontaire ou non, de ces données par l'application utilisatrice.

De préférence, ces informations sont des commandes et/ou des entrées de table. Ce sont alors des données importantes, pouvant provoquer de mauvais aiguillages d'information, si elles ont été modifiées de manière erronée.

De préférence, le périphérique est un périphérique réseau effectuant des échanges de données entre applications utilisatrices. Ainsi, en cas de dysfonctionnement, c'est toute la communication entre les applications utilisatrices qui peut être dégradée ou empêchée, les applications utilisatrices ayant reçues des données erronées par cette communication pouvant alors à leur tour dégrader ou arrêter leur propre fonctionnement, pouvant ainsi perturber également le reste du système informatique.

D'autres caractéristiques et avantages de l'invention apparaîtront à la lecture de la description qui suit d'un mode de réalisation préféré de l'invention, donnée à titre d'exemple et en référence aux dessins annexés.

### BREVE DESCRIPTION DES DESSINS

La figure 1 représente schématiquement un premier exemple de système informatique utilisant un procédé de gestion de mémoire virtuelle selon un mode de réalisation de l'invention.
La figure 2 représente schématiquement un deuxième de système informatique utilisant un procédé de gestion de mémoire virtuelle selon un mode de réalisation de l'invention.

### DESCRIPTION DETAILLEE DE L'INVENTION

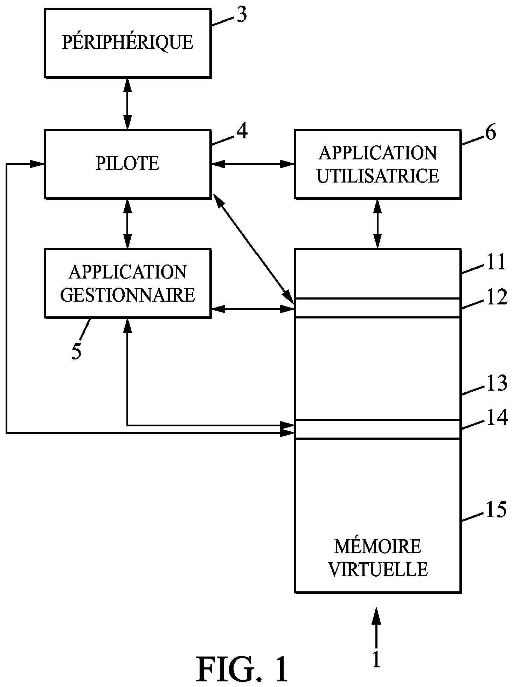

La figure 1 représente schématiquement un premier exemple de système informatique utilisant un procédé de gestion de mémoire virtuelle selon un mode de réalisation de l'invention.

Le système informatique comprend un périphérique 3, un pilote 4 de ce périphérique 3, une application utilisatrice 6 de ce périphérique 3, une mémoire virtuelle 1 de cette application utilisatrice 6, une application gestionnaire 5 créée par le pilote 4 pour accéder à la mémoire virtuelle 1, ou plus précisément pour réserver une partie de cette mémoire virtuelle 1 pour le fonctionnement du pilote 4 pour les besoins de l'application utilisatrice 6.

La mémoire virtuelle 1 comprend des zones qui restent toujours directement accessibles à l'application utilisatrice 6, par exemple les zones 11, 13 et 15.

La mémoire virtuelle 1 comprend aussi une ou plusieurs zones qui peuvent être rendues temporairement ou en permanence inaccessibles à l'application utilisatrice 6. Cette ou ces zones vont préférentiellement être rendues inaccessibles à l'application utilisatrice 6 au moins le temps que cette application utilisatrice 6 utilise le périphérique 3.

A un moment donné, l'application gestionnaire effectue l'allocation de la zone 12 à la réserve de mémoire virtuelle pour le pilote 4. A partir de ce moment-là, la zone 12 n'est plus accessible directement par l'application utilisatrice 6. En revanche, la zone 14 reste accessible directement à l'application utilisatrice 6, tout comme les zones 11, 13 et 15. Le pilote 4 utilise directement la zone 12 pour les besoins de l'application utilisatrice 6, mais n'accède à aucune des zones 11 et 13 à 15.

A un autre moment, plus tard, l'application gestionnaire effectue la libération de la zone 12 puis l'allocation de la zone 14 à la réserve de mémoire virtuelle pour le pilote 4. A partir de ce moment-là, la zone 14 n'est plus accessible directement par l'application utilisatrice 6. En revanche, la zone 12 redevient accessible directement à l'application utilisatrice 6, et les zones 11, 13 et 15 étaient restées accessibles tout le temps directement à l'application utilisatrice 6. Le pilote 4 utilise directement la zone 14 pour les besoins de l'application utilisatrice 6, mais n'accède plus à la zone 12, et n'accède pas non plus aux zones 11, 13 et 15.

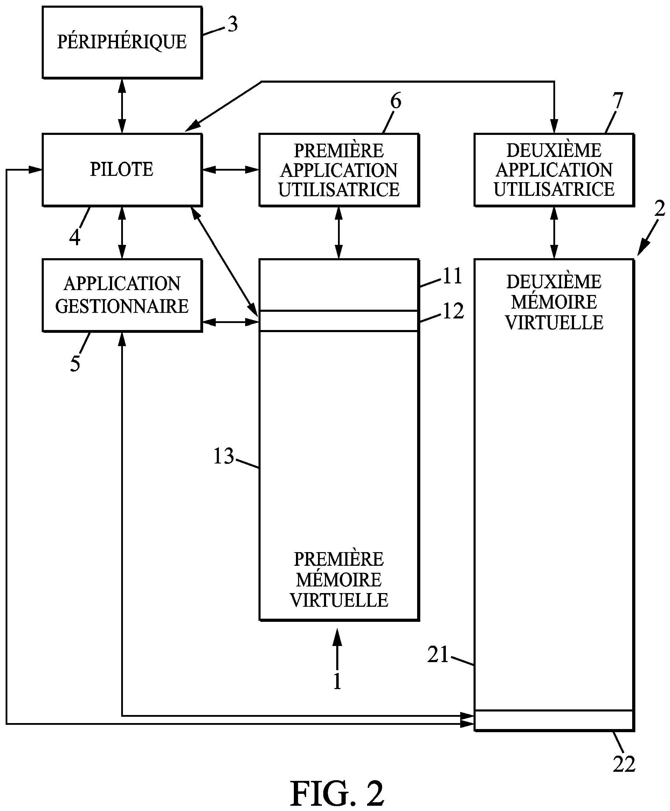

La figure 2 représente schématiquement un deuxième de système informatique utilisant un procédé de gestion de mémoire virtuelle selon un mode de réalisation de l'invention.

Le système informatique comprend un périphérique 3, un pilote 4 de ce périphérique 3, une première application utilisatrice 6 et une deuxième application utilisatrice 7 de ce périphérique 3, une première mémoire virtuelle 1 de cette première application utilisatrice 6 et une deuxième mémoire virtuelle 2 de cette deuxième application utilisatrice 7, une application gestionnaire 5 créée par le pilote 4 pour accéder aussi bien à la première mémoire virtuelle 1 de la première application utilisatrice 6 qu'à la deuxième mémoire virtuelle 2 de la deuxième application utilisatrice 7, ou plus précisément pour réserver une partie de ces mémoires virtuelles 1 et 2 pour le fonctionnement du pilote 4 pour les besoins respectifs des première application utilisatrice 6 et deuxième application utilisatrice 7.

La mémoire virtuelle 1 comprend des zones qui restent toujours directement accessibles à la première application utilisatrice 6, par exemple les zones 11 et 13. La mémoire virtuelle 1 comprend aussi une zone 12 qui est rendue temporairement ou en permanence inaccessible à la première application utilisatrice 6. Cette zone 12 va préférentiellement être rendue inaccessible à la première application utilisatrice 6 au moins le temps que cette première application utilisatrice 6 utilise le périphérique 3.

A un moment donné, l'application gestionnaire effectue l'allocation de la zone 12 à la réserve de mémoire virtuelle pour le pilote 4. A partir de ce moment-là, la zone 12 n'est plus accessible directement par la première application utilisatrice 6. En revanche, les zones 11 et 13 restent accessibles directement à la première application utilisatrice 6. Le pilote 4 utilise la zone 12 directement pour les besoins de la première application utilisatrice 6, mais n'accède à aucune des zones 11 et 13.

La mémoire virtuelle 2 comprend une zone qui reste toujours directement accessible à la deuxième application utilisatrice 7, par exemple la zone 21. La mémoire virtuelle 1 comprend aussi une zone 22 qui est rendue temporairement ou en permanence inaccessible à la deuxième application utilisatrice 7. Cette zone 22 va préférentiellement être rendue inaccessible à la deuxième application utilisatrice 7 au moins le temps que cette deuxième application utilisatrice 7 utilise le périphérique 3. Alternativement, cette zone 22 pourrait être libérée, et la réserve de mémoire virtuelle constituée ou reconstituée à un autre endroit dans la zone 21.

A un moment donné, l'application gestionnaire effectue l'allocation de la zone 22 à la réserve de mémoire virtuelle pour le pilote 4. A partir de ce moment-là, la zone 22 n'est plus accessible directement par la deuxième application utilisatrice 7. En revanche, la zone 21 reste accessible directement à la deuxième application utilisatrice 7. Le pilote 4 utilise la zone 22 directement pour les besoins de la deuxième application utilisatrice 7, mais n'accède pas à la zone 21.

A titre d'exemple préférentiel, la taille de la réserve de mémoire virtuelle peut valoir 1Mo tandis que la taille de la mémoire virtuelle peut valoir 256Go. Le rapport entre taille de réserve de mémoire virtuelle et taille de mémoire virtuelle pour une application utilisatrice est avantageusement inférieur à 1000, voire inférieur à 10000, voir inférieur à 100000.

A titre d'exemple préférentiel, le nombre d'applications utilisatrices gérées par une application gestionnaire peut valoir 512. Le nombre d'applications utilisatrices gérées par une application gestionnaire est avantageusement supérieur à 10, voire à 100.

## Revendications

1. Procédé de gestion, dans un système informatique incluant un périphérique (3) et son pilote (4), d'une mémoire virtuelle (1, 2) d'une application utilisatrice (6, 7) du périphérique (3) lequel peut accéder à la mémoire virtuelle (1, 2) de l'application utilisatrice (6, 7), où le procédé de gestion comprend :
➢ la création, dans la mémoire virtuelle (1, 2) de l'application utilisatrice (6, 7), d'une réserve (12, 14, 22) de mémoire virtuelle qui est d'une part accessible au périphérique (3) et d'autre part inaccessible à l'application utilisatrice (6, 7),
➢ la création d'une application gestionnaire (5) qui soit distincte de l'application utilisatrice (6, 7) et qui soit créée par le pilote (4) du périphérique (3) et qui soit dédiée à l'allocation d'au moins cette réserve (12, 14, 22) de mémoire virtuelle et à la libération d'au moins cette réserve (12, 14, 22) de mémoire virtuelle.

2. Procédé de gestion de mémoire virtuelle selon la revendication 1, où l'application gestionnaire (5) est enregistrée auprès du périphérique (3), lors de sa création par le pilote (4) du périphérique (3).

3. Procédé de gestion de mémoire virtuelle selon l'une quelconque des revendications précédentes, où l'allocation de cette réserve (12, 14, 22) de mémoire virtuelle et la libération de cette réserve (12, 14, 22) de mémoire virtuelle sont effectuées de manière dynamique à la requête du pilote (4) du périphérique (3).

4. Procédé de gestion de mémoire virtuelle selon l'une quelconque des revendications précédentes, où l'allocation de cette réserve (12, 14, 22) de mémoire virtuelle et la libération de cette réserve (12, 14, 22) de mémoire virtuelle, dans la mémoire virtuelle (1, 2) de l'application utilisatrice (6, 7), pour une ou plusieurs applications utilisatrices (6, 7), sont les seules fonctions de l'application gestionnaire (5).

5. Procédé de gestion de mémoire virtuelle selon l'une quelconque des revendications précédentes, où l'application utilisatrice (6, 7) a été préalablement et spécifiquement configurée pour permettre au périphérique (3) d'accéder à la mémoire virtuelle (1, 2) de cette application utilisatrice (6, 7).

6. Procédé de gestion de mémoire virtuelle selon l'une quelconque des revendications précédentes, où le périphérique (3) utilise la réserve (12, 14, 22) de mémoire virtuelle exclusivement pour les besoins de l'application utilisatrice (6, 7) correspondante.

7. Procédé de gestion de mémoire virtuelle selon l'une quelconque des revendications précédentes, où une même application gestionnaire (5) gère les réserves (12, 14, 22) de mémoire virtuelles de plusieurs applications utilisatrices (6, 7) d'un même périphérique (3), de préférence de toutes les applications utilisatrices (6, 7) d'un même périphérique (3), encore plus de préférence de toutes les applications utilisatrices (6, 7) de plusieurs ou de tous les périphériques (3) du système informatique.

8. Procédé de gestion de mémoire virtuelle selon l'une quelconque des revendications précédentes, où la réserve (12, 14, 22) de mémoire virtuelle occupe moins de 1% de l'espace mémoire de la mémoire virtuelle (1, 2) dans laquelle elle est stockée.

9. Procédé de gestion de mémoire virtuelle selon l'une quelconque des revendications précédentes, où le pilote (4) de périphérique (3) stocke, dans la réserve (12, 14, 22) de mémoire virtuelle, des informations qui d'une part sont propres à l'application utilisatrice (6, 7) et qui d'autre part peuvent permettre d'accéder à d'autres applications utilisatrices (6, 7) en cas de modification de ces informations.

10. Procédé de gestion de mémoire virtuelle selon la revendication 9, où ces informations sont des commandes et/ou des entrées de table.

11. Procédé de gestion de mémoire virtuelle selon l'une quelconque des revendications précédentes, où le périphérique (3) est un périphérique réseau effectuant des échanges de données entre applications utilisatrices (6, 7).

12. Système informatique comprenant :
➢ un périphérique (3),
➢ un pilote (4) de ce périphérique (3),
➢ une application utilisatrice (6, 7) de ce périphérique (3),
➢ une mémoire virtuelle (1, 2) de cette application utilisatrice (6, 7),
➢ l'application utilisatrice (6, 7) étant associée au périphérique (3) de manière à ce que le périphérique (3) puisse accéder à la mémoire virtuelle (1, 2) de cette application utilisatrice (6, 7),
où le système informatique comprend aussi :
➢ une application gestionnaire (5), distincte de l'application utilisatrice (6, 7), créée par le pilote (4) du périphérique (3), dédiée à l'allocation d'au moins une réserve (12, 14, 22) de mémoire virtuelle et à la libération d'au moins cette réserve (12, 14, 22) de mémoire virtuelle,
➢ cette réserve (12, 14, 22) de mémoire virtuelle est localisée dans la mémoire virtuelle (1, 2) de l'application utilisatrice (6, 7) en étant d'une part accessible au périphérique (3) et d'autre part inaccessible à l'application utilisatrice (6, 7).

## Patentansprüche

1. Verfahren zur Verwaltung eines virtuellen Speichers (1, 2) einer Benutzeranwendung (6, 7) des Peripheriegeräts (3), die auf den virtuellen Speicher (1, 2) der Benutzeranwendung (6, 7) zugreifen kann, in einem Computersystem, das ein Peripheriegerät (3) und seinen Treiber (4) umfasst, wobei das Verwaltungsverfahren Folgendes umfasst:
➢ Erzeugen einer virtuellen Speicherreserve (12, 14, 22) im virtuellen Speicher (1, 2) der Benutzeranwendung (6, 7), die einerseits für das Peripheriegerät (3) zugänglich und andererseits für die Benutzeranwendung (6, 7) unzugänglich ist,
➢ Erzeugen einer Verwaltungsanwendung (5), die von der Benutzeranwendung (6, 7) getrennt ist und die vom Treiber (4) des Peripheriegeräts (3) erzeugt wird und die für die Zuweisung wenigstens dieser virtuellen Speicherreserve (12, 14, 22) und die Freigabe wenigstens dieser virtuellen Speicherreserve (12, 14, 22) bestimmt ist.

2. Verfahren zur Verwaltung von virtuellem Speicher nach Anspruch 1, wobei die Verwaltungsanwendung (5) bei dem Peripheriegerät (3) registriert wird, wenn sie durch den Treiber (4) des Peripheriegeräts (3) erzeugt wird.

3. Verfahren zur Verwaltung von virtuellem Speicher nach einem der vorhergehenden Ansprüche, wobei die Zuweisung dieser virtuellen Speicherreserve (12, 14, 22) und die Freigabe dieser virtuellen Speicherreserve (12, 14, 22) auf Anfrage des Treibers (4) des Peripheriegeräts (3) dynamisch durchgeführt werden.

4. Verfahren zur Verwaltung von virtuellem Speicher nach einem der vorhergehenden Ansprüche, wobei die Zuweisung dieser virtuellen Speicherreserve (12, 14, 22) und die Freigabe dieser virtuellen Speicherreserve (12, 14, 22) im virtuellen Speicher (1, 2) der Benutzeranwendung (6, 7) für eine oder mehrere Benutzeranwendungen (6, 7) die einzigen Funktionen der Verwaltungsanwendung (5) sind.

5. Verfahren zur Verwaltung von virtuellem Speicher nach einem der vorhergehenden Ansprüche, wobei die Benutzeranwendung (6, 7) zuvor und spezifisch konfiguriert wurde, um dem Peripheriegerät (3) den Zugriff auf den virtuellen Speicher (1, 2) dieser Benutzeranwendung (6, 7) zu ermöglichen.

6. Verfahren zur Verwaltung von virtuellem Speicher nach einem der vorhergehenden Ansprüche, wobei das Peripheriegerät (3) die virtuelle Speicherreserve (12, 14, 22) ausschließlich für die Bedürfnisse der entsprechenden Benutzeranwendung (6, 7) verwendet.

7. Verfahren zur Verwaltung von virtuellem Speicher nach einem der vorhergehenden Ansprüche, wobei eine einzige Verwaltungsanwendung (5) die virtuellen Speicherreserven (12, 14, 22) mehrerer Benutzeranwendungen (6, 7, 8, 9, 10) desselben Peripheriegeräts (3) verwaltet, bevorzugt aller Benutzeranwendungen (6, 7) desselben Peripheriegeräts (3), stärker bevorzugt aller Benutzeranwendungen (6, 7) mehrerer oder aller Peripheriegeräte (3) des Computersystems.

8. Verfahren zur Verwaltung von virtuellem Speicher nach einem der vorhergehenden Ansprüche, wobei die virtuelle Speicherreserve (12, 14, 22) weniger als 1% des Speicherplatzes des virtuellen Speichers (1, 2), in dem sie gespeichert wird, einnimmt.

9. Verfahren zur Verwaltung von virtuellem Speicher nach einem der vorhergehenden Ansprüche, wobei der Treiber (4) des Peripheriegeräts (3) in der virtuellen Speicherreserve (12, 14, 22) Informationen speichert, die einerseits für die Benutzeranwendung (6, 7) spezifisch sind und andererseits bei einer Änderung dieser Informationen den Zugriff auf andere Benutzeranwendungen (6, 7) ermöglichen können.

10. Verfahren zur Verwaltung von virtuellem Speicher nach Anspruch 9, wobei es sich bei diesen Informationen um Befehle und/oder Tabelleneinträge handelt.

11. Verfahren zur Verwaltung von virtuellem Speicher nach einem der vorhergehenden Ansprüche, wobei das Peripheriegerät (3) ein Netzwerkgerät ist, das Daten zwischen Benutzeranwendungen (6, 7) austauscht.

12. Computersystem, das Folgendes umfasst:
➢ ein Peripheriegerät (3),
➢ einen Treiber (4) für dieses Peripheriegerät (3),
➢ eine Benutzeranwendung (6, 7) dieses Peripheriegeräts (3),
➢ einen virtuellen Speicher (1, 2) dieser Benutzeranwendung (6, 7),
➢ wobei die Benutzeranwendung (6, 7) mit dem Peripheriegerät (3) derart verbunden ist, dass das Peripheriegerät (3) auf den virtuellen Speicher (1, 2) dieser Benutzeranwendung (6, 7) zugreifen kann,
wobei das Computersystem ferner umfasst:
➢ eine von der Benutzeranwendung (6, 7) verschiedene, vom Treiber (4) des Peripheriegeräts (3) erstellte Verwaltungsanwendung (5), die dazu bestimmt ist, wenigstens eine virtuelle Speicherreserve (12, 14, 22) zuzuweisen und wenigstens diese virtuelle Speicherreserve (12, 14, 22) freizugeben,
➢ wobei diese virtuelle Speicherreserve (12, 14, 22) im virtuellen Speicher (1, 2) der Benutzeranwendung (6, 7) lokalisiert ist, wobei sie einerseits für das Peripheriegerät (3) zugänglich und andererseits für die Benutzeranwendung (6, 7) unzugänglich ist.

## Claims

1. A method for managing, in a computer system including a peripheral (3) and the driver (4) thereof, a virtual memory (1, 2) of a user application (6, 7) of the peripheral (3) which can access the virtual memory (1, 2) of the user application (6, 7), wherein the management method comprises:
➢ the creation, in the virtual memory (1, 2) of the user application (6, 7), of a reserve (12, 14, 22) of virtual memory which is, on the one hand, accessible to the peripheral (3) and, on the other hand, inaccessible to the user application (6, 7),
➢ the creation of a manager application (5) which is distinct from the user application (6, 7) and which is created by the driver (4) of the peripheral (3) and which is dedicated to the allocation of at least this reserve (12, 14, 22) of virtual memory and to the release of at least this reserve (12, 14, 22) of virtual memory.

2. The method for managing virtual memory according to claim 1, wherein the manager application (5) is registered with the peripheral (3), when it is created by the driver (4) of the peripheral (3).

3. The method for managing virtual memory according to any one of the preceding claims, wherein the allocation of this reserve (12, 14, 22) of virtual memory and the release of this reserve (12, 14, 22) of virtual memory are performed dynamically at the request of the driver (4) of the peripheral (3).

4. The method for managing virtual memory according to any one of the preceding claims, wherein the allocation of this reserve (12, 14, 22) of virtual memory and the release of this reserve (12, 14, 22) of virtual memory, in the virtual memory (1, 2) of the user application (6, 7), for one or more user applications (6, 7), are the only functions of the manager application (5).

5. The method for managing virtual memory according to any one of the preceding claims, wherein the user application (6, 7) has been previously and specifically configured to allow the peripheral (3) to access the virtual memory (1, 2) of this user application (6, 7).

6. The method for managing virtual memory according to any one of the preceding claims, wherein the peripheral (3) uses the reserve (12, 14, 22) of virtual memory exclusively for the needs of the corresponding user application (6, 7).

7. The method for managing virtual memory according to any one of the preceding claims, wherein the same manager application (5) manages the reserves (12, 14, 22) virtual memory of several user applications (6, 7) of the same peripheral (3), preferably of all user applications (6, 7) of the same peripheral (3), even more preferably of all user applications (6, 7) of several or all peripherals (3) of the computer system.

8. The method for managing virtual memory according to any one of the preceding claims, wherein the reserve (12, 14, 22) of virtual memory occupies less than 1% of the memory space of the virtual memory (1, 2) in which it is stored.

9. The method for managing virtual memory according to any one of the preceding claims, wherein the driver (4) of peripheral (3) stores, in the reserve (12, 14, 22) of virtual memory, information which, on one hand, are specific to the user application (6, 7) and which, on the other hand, can allow accessing other user applications (6, 7) in case of change in this information.

10. The method for managing virtual memory according to claim 9, wherein this information is commands and/or table entries.

11. The method for managing virtual memory according to any one of the preceding claims, wherein the peripheral (3) is a network peripheral performing data exchanges between user applications (6, 7).

12. A computer system comprising:
➢ a peripheral (3),
➢ a driver (4) of this peripheral (3),
➢ a user application (6, 7) of this peripheral (3),
➢ a virtual memory (1, 2) of this user application (6, 7),
➢ the user application (6, 7) being associated with the peripheral (3) so that the peripheral (3) can access the virtual memory (1, 2) of this user application (6, 7),
wherein the computer system also comprises:
➢ a manager application (5), distinct from the user application (6, 7), created by the driver (4) of the peripheral (3), dedicated to the allocation of at least one reserve (12, 14, 22) of virtual memory and to the release of at least this reserve (12, 14, 22) of virtual memory,
➢ this reserve (12, 14, 22) of virtual memory is located in the virtual memory (1, 2) of the user application (6, 7) by being, on the one hand, accessible to the peripheral (3) and, on the other hand, inaccessible to the user application (6, 7).
